Europäisches Patentamt

European Patent Office

Office européen des brevets

(11) Veröffentlichungsnummer: **0 170 008**
A2

# (12) EUROPÄISCHE PATENTANMELDUNG

(21) Anmeldenummer: **85107033.4**

(22) Anmeldetag: **07.06.85**

(51) Int. Cl.⁴: **G 02 B 23/10**
G 01 D 5/26, G 02 B 3/00

(30) Priorität: **04.07.84 CH 3223/84**

(43) Veröffentlichungstag der Anmeldung:
**05.02.86 Patentblatt 86/6**

(84) Benannte Vertragsstaaten:
**AT CH DE FR GB IT LI**

(71) Anmelder: **ELESTA AG ELEKTRONIK**

**CH-7310 Bad Ragaz(CH)**

(72) Erfinder: **De Coi, Beat**
**St. Gallerstrasse 47**
**CH-7320 Sargans(CH)**

(72) Erfinder: **Schärmeli, Kurt**
**Pizolstrasse 15**
**CH-7310 Bad Ragaz(CH)**

(74) Vertreter: **Riederer, Conrad A., Dr.**
**Bahnhofstrasse 10**
**CH-7310 Bad Ragaz(CH)**

(54) **Lichttaster oder Lichtschranke.**

(57) Die Planfläche (29) der Plankonvexlinse (19) ist mit einer Neigung von etwa 4° zu einer zur Achse (35) des Lichtbündels senkrechten Ebene (37) angeordnet. Das durch die Planfläche (29) zurückgestrahlte Licht fällt daher nicht auf den Lichtsender (17). Dadurch wird ein niedriger Störsignalpegel erreicht. Alle so hergestellten Lichttaster und Lichtschranken haben daher ein gutes Verhältnis zwischen Nutzsignal und Störsignal und weisen deshalb keine grossen Unterschiede im Schaltverhalten auf.

EP 0 170 008 A2

./...

Fig.3

## Lichttaster oder Lichtschranke

Die Erfindung betrifft einen Lichttaster oder eine Lichtschranke mit einem Lichtsender und einem Lichtempfänger, welche beide im gleichen Gehäuse untergebracht sind, einer Plankonvexlinse zur Bündelung des Lichts des Lichtsenders zu einem Lichtbündel sowie zur Fokussierung des zurückgeworfenen Lichts und Mitteln zur Lenkung des zurückgeworfenen Lichts zum Lichtempfänger.

Lichttaster und Lichtschranken dieser Art sind Massenprodukte mit einem grossen Anwendungsbereich. Je billiger sie gefertigt werden können, desto grösser werden die Anwendungsmöglichkeiten. Um Lichttaster oder Lichtschranken möglichst billig herzustellen, werden billig herzustellende optische Linsen aus Kunststoff verwendet. Besonders billig sind Plankonvexlinsen aus Kunststoff. Derartige Lichttaster und Lichtschranken wiesen bisher grosse Qualitätsunterschiede auf, auch wenn sie aus ein und derselben Serie stammten. Trotz aller Anstrengungen bei der Justage des optischen Systems konnte bei vielen Exemplaren der Störsignalpegel nicht unter einen zweckmässigen Höchstwert unterhalb der Schaltschwelle gesenkt werden. Nun ist bekannt, dass die Formstabilität von Kunststoffteilen nicht jene von Glaslinsen erreicht. Daraus wurde geschlossen, dass dies die Ursache für mehr Störlicht sei. Die bei

0170008

Lichttastern und Lichtschranken mit Kunststofflinsen auftretenden erheblichen Qualitätsunterschiede wurden daher als naturgegeben hingenommen.

Es ist Aufgabe der vorliegenden Erfindung Lichttaster oder Lichtschranken der eingangs erwähnten Art derart zu verbessern, dass sie einen niedrigen Störsignalpegel aufweisen. Insbesondere sollen die bisher bei der Fabrikation auftretenden grossen Schwankungen der individuellen Ansprechempfindlichkeit von Lichttastern und Lichtschranken verhindert werden.

Gemäss der vorliegenden Erfindung wird dies dadurch erreicht, dass die Planfläche der Plankonvexlinse mit einer Neigung zu einer zur Achse des Lichtbündels senkrechten Ebene angeordnet ist.

Von der Anmelderin durchgeführte eingehende Untersuchungen haben gezeigt, dass bei Kunststofflinsen beim Austritt des Lichts aus der Linse ein relativ hoher Lichtanteil zurückgeworfen wird. Auf jeden Fall ist dieser Anteil wesentlich höher als bei Linsen aus geschliffenem Glas. Da diese Eigenschaft von Kunststofflinsen praktisch nicht oder nur wenig beeinflussbar ist, setzt sich die vorliegende Erfindung das Ziel, wenigstens das zurückgeworfene Licht daran zu hindern, dass es auf den Lichtempfänger auftrifft. Dies wird durch die beschriebene Schrägstellung der Planfläche erreicht. Nach Einführung dieser Massnahme wiesen alle Lichttaster oder Lichtschranken einen wesentlich geringeren Störsignalpegel auf. Die bisher bei der Fabrikation festgestellten grossen individuellen Empfindlichkeitsunterschiede verschwanden.

Die Neigung der Planfläche beträgt vorteilhaft 2 bis 10°. Als besonders vorteilhaft hat sich eine Neigung von 4° erwiesen. Diese Neigung hängt jedoch noch von anderen Faktoren ab, wie z.B. die Brennweite der Linse und dem Durchmesser der Blende des Lichtempfängers.

Die Erfindung bietet Vorteile für Linsen aus den verschiedensten Materialien. Von besonderem Interesse ist jedoch ihre Anwendung bei Lichttastern und Lichtschranken mit Kunststofflinsen. Dabei wird vorteilhaft die Planfläche der Kunststofflinse aussen, also auf der vom Lichtsender entfernten Seite, angeordnet.

Ein Ausführungsbeispiel der Erfindung wird nun unter Bezugnahme auf die Zeichnung beschrieben. Es zeigt:

Fig. 1    einen bekannten Lichttaster, wobei der Strahlengang des ausgehenden Lichts und der Strahlengang des von der Linse selbst zurückgeworfenen Lichts ersichtlich ist,

Fig. 2    ein Ausführungsbeispiel des Lichttasters oder der Lichtschranke gemäss der Erfindung, wobei der Strahlengang des ausgehenden und des wieder zurückkehrenden Lichts ersichtlich ist, nicht jedoch der Strahlengang des von der Linse selbst zurückgeworfenen Lichts,

Fig. 3    die Lichtschranke von Figur 2 mit dem Strahlengang des ausgehenden Lichts und dem Strahlengang des von der Linse selbst zurückgeworfenen Lichts.

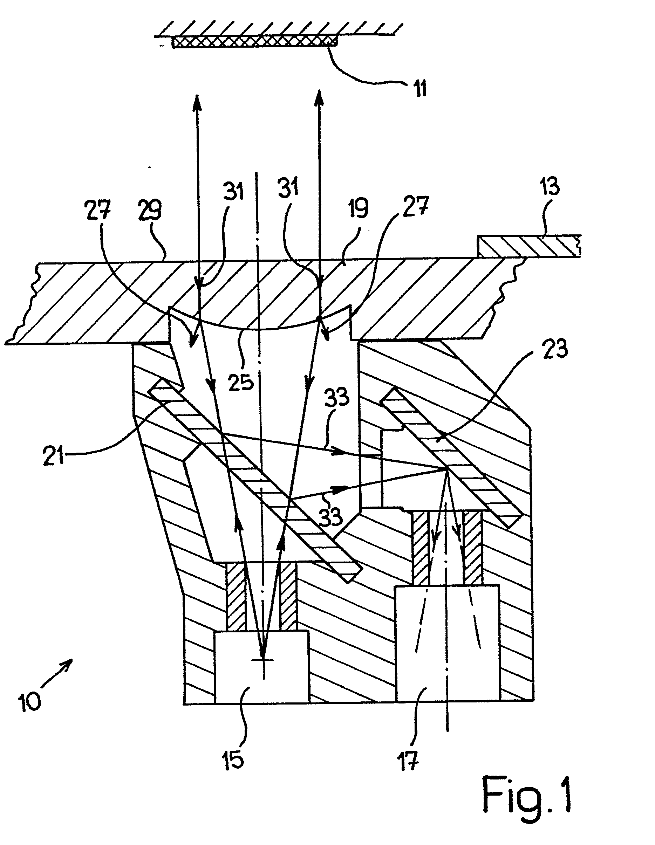

Figur 1 zeigt einen Lichttaster 10 in an sich bekannter
Bauart. Wird ausserdem noch ein Reflektor 11 vorgesehen,
so liegt eine an sich bekannte Reflexlichtschranke vor.

In einem Gehäuse, das durch die Bezugsziffer 13 angedeutet ist, befindet sich der Lichtsender 15, z.B. eine
Laserdiode 15, und ein Lichtempfänger 17, z.B. eine Fotodiode oder ein Fototransistor. Eine Kunststofflinse 19,
die als Plankonvexlinse ausgebildet ist, dient der
Bündelung des Lichts des Lichtsenders 15 sowie der
Fokussierung des zurückgeworfenen Lichts. Zwei Spiegel 21,
23 sorgen dafür, dass das von aussen durch die Linse 19
zurückgeworfene Licht zum Lichtempfänger 17 gelangt.

Von dem vom Lichtsender 15 ausgestrahlten Licht wird ein
Teil an der gewölbten Fläche 25 der Linse 19 zurückgeworfen, wie dies durch die Pfeile 27 angedeutet wird.
Von diesem Licht gelangt jedoch praktisch keines zum
Lichtempfänger 17.

Eingehende Untersuchungen haben ergeben, dass relativ viel
Licht von der Planfläche 29 der Linse zurückgeworfen wird,
wie dies durch die Pfeile 31 angedeutet wird. Je nach der
Qualität der Kunststofflinse handelt es sich um etwa 4 bis
8 Prozent des vom Lichtsender 15 in Richtung auf die Linse
abgestrahlten Lichts. Dieses von der Linse 19 zurückgeworfene Licht fällt im üblichen Strahlengang, der durch
die Strahlen 33 eingezeichnet ist, auf den Lichtempfänger
17. Dieses Störlicht erzeugt ein relativ hohes Störsignal
und führt damit zu einer Verschlechterung des Nutz-/Störsignal-Verhältnisses. Liegt somit die Schaltschwelle
relativ nahe beim Störsignalpegel, so genügt bereits ein kleines Signal, um den Lichttaster oder die Lichtschranke zu schalten. Wird das Störsignal noch durch weitere Einflüsse, z.B. durch Alterung, erhöht, so kann es bald einmal zu Fehlschaltungen kommen. Die Störreflektionen führen also zu einer unerwünscht hohen Empfindlichkeit.

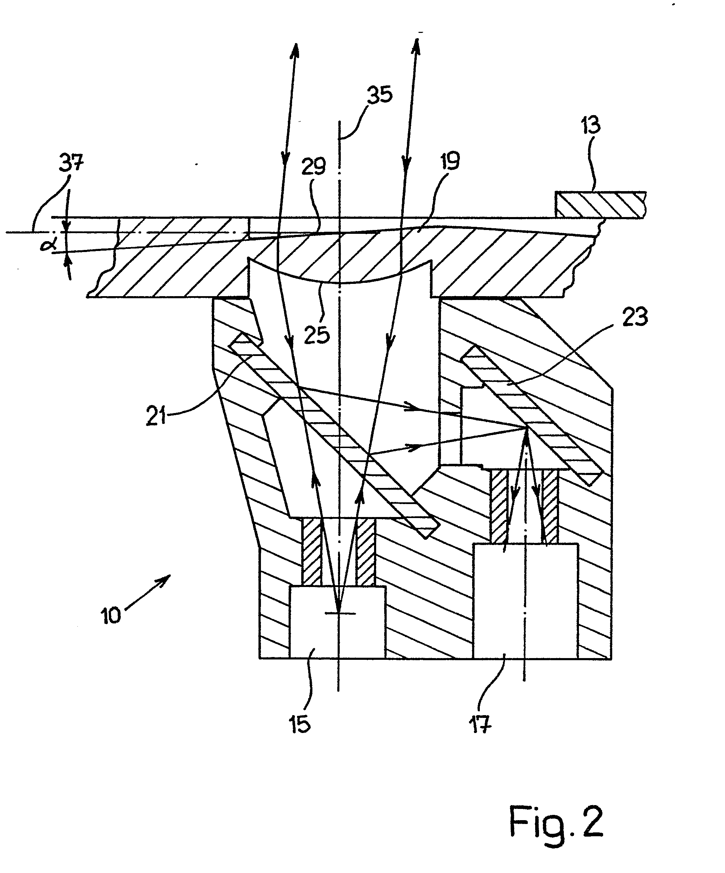

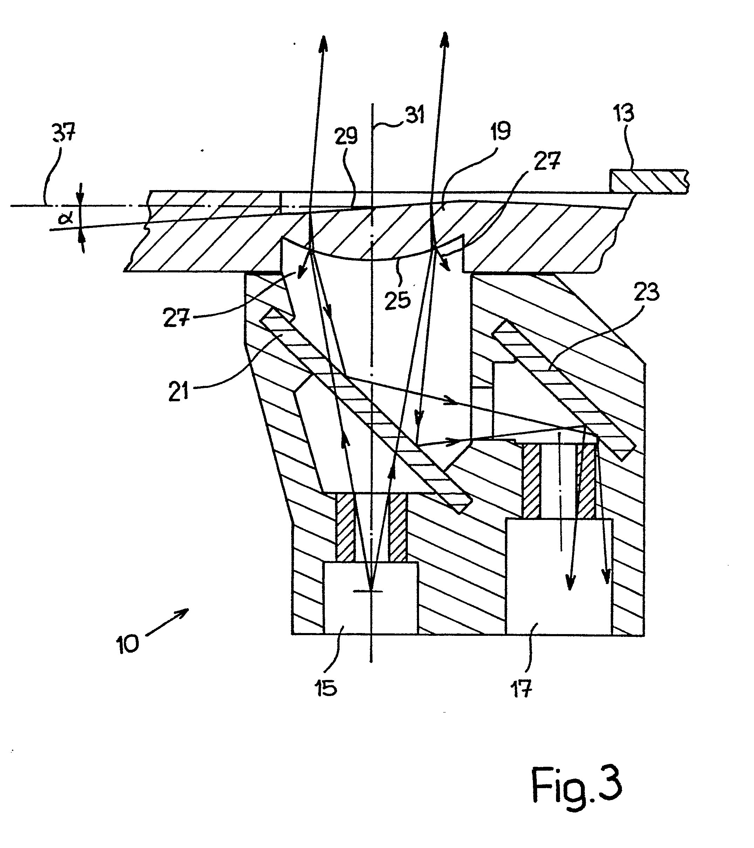

Die Figuren 2 und 3 zeigen nun ein Ausführungsbeispiel der erfindungsgemässen Lichtschranke. Dieses Ausführungsbeispiel unterscheidet sich von der bekannten unter Bezugnahme auf Figur 1 beschriebenen Lichtschranke lediglich dadurch, dass die Planfläche 29 der Linse 19 eine Neigung zu einer zur Achse 35 des Lichtbündels senkrechten Ebene 37 aufweist. Diese Ebene ist lediglich eine gedachte Ebene und wird daher in der Zeichnung strichpunktiert dargestellt. Der Neigungswinkel beträgt beim gezeigten Ausführungsbeispiel $4°$. Versuche haben jedoch gezeigt, dass auch ein Neigungswinkel im Bereich von 2 bis $10°$ die gewünschte Wirkung aufweist. Der besseren Uebersicht wegen ist in Figur 2 lediglich der ausgehende und der eingehende Strahlengang dargestellt. Demgegenüber zeigt Figur 3 den eingehenden Strahlengang nicht, jedoch den Strahlengang, der die von der Linse 19 zurückgeworfene Strahlung zeigt. Es ist nun ersichtlich, dass die von der Planfläche 29 verursachte Rückstrahlung wegen der schrägen Anordnung derselben den Lichtempfänger 17 nicht mehr erreicht. Dadurch wird ein niedriger Störsignalpegel des Lichttasters oder der Lichtschranke erreicht, wie dies bisher praktisch nur bei den teuren Ausführungen mit einer Glaslinse erreichbar war.

Die Erfindung ist nicht auf das dargestellte Ausführungsbeispiel beschränkt. So ist es beispielsweise durchaus möglich, den Lichtempfänger 17 in einem Winkel zum Lichtsender anzuordnen, wobei der Spiegel 23 überflüssig wird.

Patentansprüche

1. Lichttaster oder Lichtschranke mit einem Lichtsender und einem Lichtempfänger, welche beide im gleichen Gehäuse untergebracht sind, einer Plankonvexlinse zur Bündelung des Lichts des Lichtsenders zu einem Lichtbündel sowie zur Fokussierung des zurückgeworfenen Lichts und Mitteln zur Lenkung des zurückgeworfenen Lichts zum Lichtempfänger, dadurch gekennzeichnet, dass die Planfläche (29) der Plankonvexlinse (19) mit einer Neigung ($\alpha$) zu einer zur Achse (35) des Lichtbündels senkrechten Ebene (37) angeordnet ist.

2. Lichttaster oder Lichtschranke nach Anspruch 1, dadurch gekennzeichnet, dass die Neigung 2 bis 10° beträgt.

3. Lichttaster oder Lichtschranke nach Anspruch 2, dadurch gekennzeichnet, dass die Neigung 4° beträgt.

4. Lichttaster oder Lichtschranke nach einem der Ansprüche 1 bis 3, dadurch gekennzeichnet, dass die Plankonvexlinse aus Kunststoff besteht.

5. Lichttaster oder Lichtschranke nach einem der Ansprüche 1 bis 4, dadurch gekennzeichnet, dass die Planfläche (29) aussen angeordnet ist.

Fig.1

0170008

Fig. 2

Fig.3